# EUROPEAN PATENT APPLICATION

(11) **EP 3 621 011 A1**
(43) Date of publication of application: **11.03.2020**
(21) Application number: 19194146.7
(22) Date of filing: 28.08.2019
(51) Int. Cl.: G06Q 10/10, G06Q 10/02

(54) **A METHOD, APPARATUS AND COMPUTER PROGRAM FOR SELECTING A MEETING AREA TO BOOK**

(30) Priority: 05.09.2018 GB 201814422
(71) Applicant: SONY Corporation, Tokyo 108-0075 (JP)
(72) Inventor: GRONQVIST, Oskar, Weybridge, Surrey KT13 0XW (GB); CARLSSON, Fredrik, Weybridge, Surrey KT13 0XW (GB); KRETZ, Martin, Weybridge, Surrey KT13 0XW (GB); EKHOLM, Sara, Weybridge, Surrey KT13 0XW (GB); LUNDGREN, Lars-Gunnar, Weybridge, Surrey KT13 0XW (GB); PERSSON, Magnus, Weybridge, Surrey KT13 0XW (GB)
(74) Representative: D Young & Co LLP

(57) **Abstract**

A method of selecting a meeting area to book is described. The method comprises the steps of: determining the location of a user; determining a booking state of a plurality of candidate meeting areas; and in dependence of the user's location and the booking state of the plurality of candidate meeting areas; the method comprises: automatically selecting and booking one of the candidate meeting areas to the user for a predetermined period of time; and notifying the user of the booking.

## Description

### BACKGROUND

### Field of the Disclosure

The present invention relates to a method, apparatus and computer program.

### Description of the Related Art

The "background" description provided herein is for the purpose of generally presenting the context of the disclosure. Work of the presently named inventors, to the extent it is described in the background section, as well as aspects of the description which may not otherwise qualify as prior art at the time of filing, are neither expressly or impliedly admitted as prior art against the present invention.

With working practices changing, the use of meeting rooms is becoming more varied and flexible. For example, meeting rooms are usually no longer booked many weeks in advance. Instead, meeting rooms are increasingly being used on an ad-hoc basis where groups of co-workers will congregate to discuss matters.

However, there is still the requirement to conduct planned and more structured meetings in meeting rooms. As such there exists meeting room booking systems. These meeting room booking systems usually require an element of checking in to the room by the users to ensure that the meeting room is being used as scheduled. Typically, this requires a user to press a button upon entry to the room.

This checking in process is important. Where a user does not check in to the meeting room, it is assumed that the meeting room is not being used as scheduled. The meeting room booking is then cancelled so that other colleagues can use the room for an ad-hoc gathering. When colleagues check a meeting room planner, therefore, they see the meeting room as available and will interrupt the scheduled meeting. This is highly inefficient and does lead to tension in the workplace.

Accordingly, there exists a desire to improve the scheduling of meeting rooms and reduce the likelihood of a meeting room being denoted as available when it is occupied.

It is an aim of embodiments of the present disclosure to at least address one of these issues.

### SUMMARY

According to the disclosure, there is provided a method of selecting a meeting area to book, comprising the steps of: determining the location of a user; determining a booking state of a plurality of candidate meeting areas; and in dependence of the user's location and the booking state of the plurality of candidate meeting areas; the method comprises: automatically selecting and booking one of the candidate meeting areas to the user for a predetermined period of time; and notifying the user of the booking.

The foregoing paragraphs have been provided by way of general introduction, and are not intended to limit the scope of the following claims. The described embodiments, together with further advantages, will be best understood by reference to the following detailed description taken in conjunction with the accompanying drawings.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
Figure 1 describes a booking server according to embodiments of the disclosure;
Figure 2 describes a user device according to embodiments of the disclosure;
Figure 3A shows a plan view of a meeting room utilising embodiments of the disclosure;
Figure 3B shows a side view of the meeting room of Figure 3A;
Figure 4 shows sensors according to embodiments of the disclosure;
Figure 5 shows an exploded view of one of the sensors in Figure 4;
Figure 6 shows a database entry for the meeting room and various users according to embodiments of the disclosure;
Figure 7 shows a flow chart describing a user device registration process according to embodiments of the disclosure;
Figure 8 shows a flow chart describing a booking process according to embodiments of the disclosure;
Figure 9 shows a flow chart describing a re-booking process according to embodiments of the disclosure; and
Figure 10 shows a flow chart showing a booking process according to embodiments of the disclosure.

### DESCRIPTION OF THE EMBODIMENTS

Referring now to the drawings, wherein like reference numerals designate identical or corresponding parts throughout the several views.

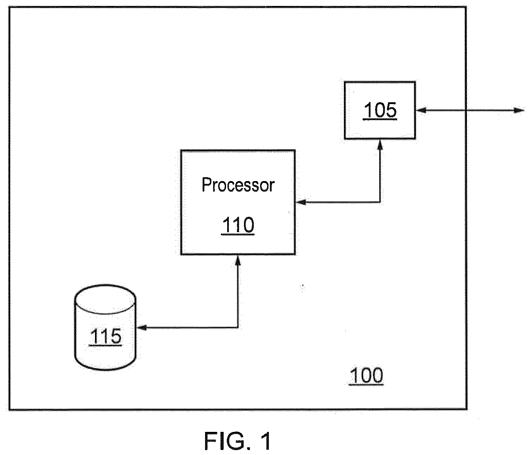

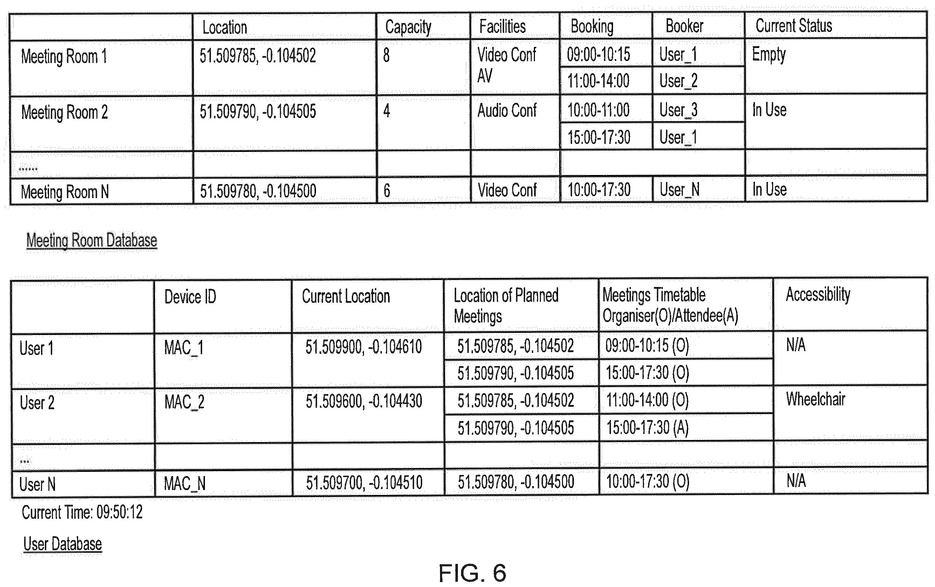

Figure 1 shows a booking server according to embodiments of the present disclosure. The booking server 100 comprises a server processor 110. The server processor 110 is embodied as processing circuitry such as a microprocessor or an Application Specific Integrated Circuit or another circuit design and controls the operation of the booking server using a computer program which is embodied as software code. The booking server 100 is controlled by the server processor 110 to perform embodiments of the disclosure. Server storage 115 is connected to the server processor 110 and stores thereon computer-readable instructions which control the server processor 110. In addition, the server storage 115 also includes a meeting room database and a user database as will be explained later with reference to Figure 6. The server storage 115 is, in embodiments, either a magnetically readable storage medium or a solid state storage medium but the disclosure is not limited. For example, the server storage 115 may be located outside of the server and may be connected to the server via a network or may be located on the cloud.

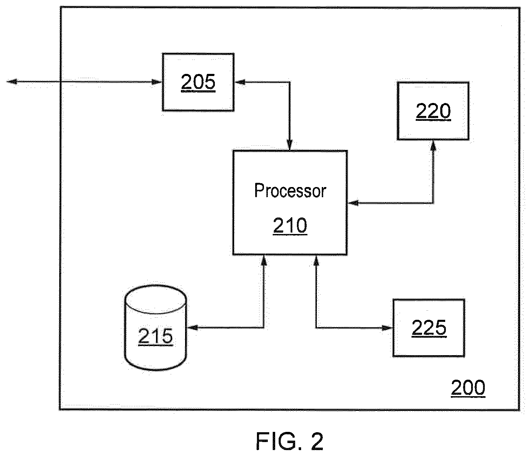

Additionally connected to the server processor 110 is server communication circuitry 105. Server communication circuitry 105 connects the booking server 100 to a network. The network to which booking server 100 is connected via server communication circuitry 105 may be a wide area network, such as the Internet, or may be a Local Area Network or the like. The purpose of the server communication circuitry 105 is to send and receive data from various user devices 200 that are explained with reference to Figure 2. The server communication circuitry 105 will communicate with sensors mounted in each meeting room indicating the presence of a user in the meeting room as will be described later.

Referring to Figure 2, a user device 200 is shown. The user device 200 is controlled by a device processor 210. The device processor 210 may be embodied as a microprocessor or an Application Specific Integrated Circuit or other processing circuitry. The device processor 210 operates in accordance with computer readable software code that is located on device storage 215. Device storage 215 may be embodied as solid state storage medium or a magnetically readable storage medium. Alternatively, device storage 215 may be located remotely to the user device such as being located on the cloud and may be accessible over the internet. Other data such as a Unique ID for the user device 200 and various user profiles are also stored on device storage 215.

Additionally connected to the device processor 210 is device communication circuitry 205. The purpose of the device communication circuitry 205 is to allow the user device 200 to communicate with another device over a network or in a point-to-point relationship. The device communication circuitry 205 may therefore connect the user device 200 to another user device 200 or the booking server 100 over a network connection. Specifically, it is envisaged that the user device 200 will be a device that connects to the booking server 100 over a network such as a Local Area Network or a Wide Area Network.

Additionally connected to device processor 210 is a device interface 220. The purpose of the device interface 220 is to allow a user to interact with the user device 200. For example, a user may wish to interact with the user device 200 using a touch screen. In this case, the device interface 220 may be a touch screen such as a capacitive touch screen or a resistive type touch screen.

Finally, device positioning circuitry 225 is connected to device processor 210. The device positioning circuitry 225 may use low power Bluetooth positioning that uses BLE beacons located around a building. Of course the disclosure is not so limited and the device positioning circuitry 225 may use a Global Positioning System (GPS) receiver other such circuitry allowing the exact location of the user device 200 to be determined. Specifically, the user device 200 may be located using its position within a wireless network using information derived from the device communication circuitry 205. Alternatively, or additionally, the device processing circuitry 225 may use a bespoke mechanism to determine the location of the user device to a specific level of accuracy.

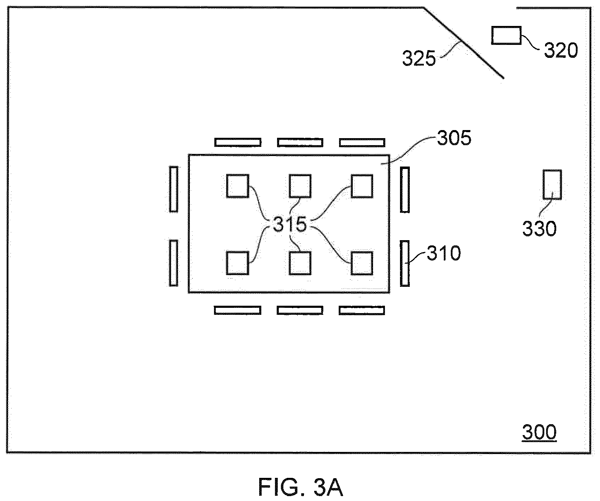

Referring to Figure 3A, a plan view of a meeting room 300 is shown. The meeting room 300 includes a meeting desk 305 surrounded by a number of chairs 310. Although Figure 3A shows 10 chairs (and so the meeting room has a capacity of 10), any size of meeting desk, number of chairs and thus capacity is envisaged.

It should also be noted that the meeting room 300 is one type of meeting area. A meeting area is any particular location which is appropriate for a congregation of people. A staff break room, reception area or the like are also examples of meeting areas. For the purpose of an embodiment of the disclosure however, a meeting room will be described, although the disclosure itself is not so limited.

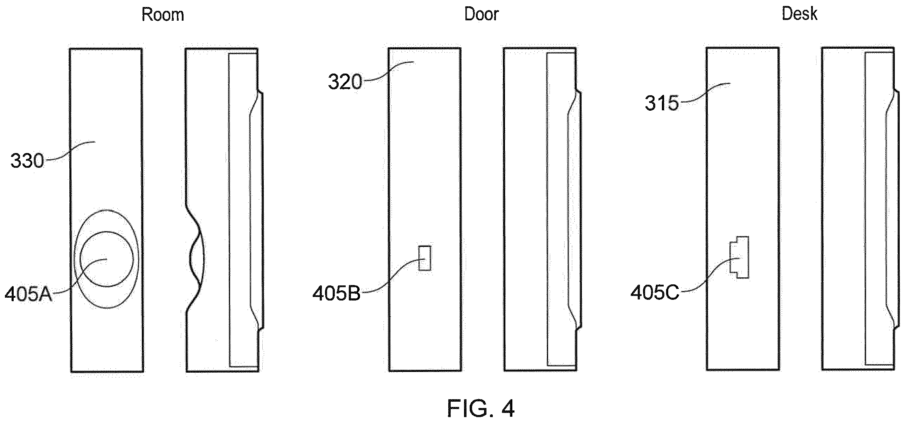

Additionally shown in meeting room 300 are a number of desk sensors 315. These desk sensors 315 will be described later with reference to Figure 4. The desk sensors 315 are mounted underneath the meeting desk 305 and, in embodiments, comprise an Infra-Red sensor. The purpose of the desk sensor 315 is to detect a user sat at the meeting desk 310. Therefore, the desk sensors 315 are mounted such that a user sitting in a meeting chair 310 will be detected by the desk sensor 315. This means that the desk sensor 315 may comprise a microwave sensor instead of an Infra-Red sensor. Similarly, although the position of the desk sensors 315 in Figure 3A is above every seating position, the disclosure is not so limited and one or more desk sensors 315 may be positioned elsewhere under the meeting desk 315 to achieve the result of detecting one or more users sitting at the meeting desk 305.

Additionally provided in the meeting room 300 are a door sensor 320 and a room sensor 330. The door sensor 320 and the room sensor 330 will also be described with reference to Figure 4 and may include an Infra-Red sensor or a microwave sensor or the like. However, the purpose and position of the door sensor 320 is to detect a person walking through the doorway. It may be that the door sensor 320 is used to detect just the opening of door 325. However, it is desirable to detect the movement of a person moving through the doorway as sometimes the door is not closed between meetings. Therefore, a door sensor 320 that just detects movement of the door 325 may not indicate the presence of a person in the meeting room 300.

Similarly, the purpose of the room sensor 330 is to detect the presence of a user in the meeting room 300. In this regard, the room sensor 330 may be at an elevated position. Additionally, the sensitivity of the room sensor 330 may be set to detect very small movements of people in the meeting room. This is because it is typical for people to perform very little movement during meetings and so in order to detect the presence of a user in the meeting room 300, very small movements should be detected. An example would be that the room sensor 330 should be sensitive enough to detect a person moving a hand 5cm.

Also, although only one door sensor 320 and one room sensor 330 is shown, the disclosure is no way limited to this. In fact, a plurality of sensors may be provided depending upon the layout of the room as would be appreciated. It is envisaged that to reduce costs, in some instances, only one or more room sensor will be provided with no door sensor.

It should also be noted that the meeting room 300 would have other facilities associated with it. For example, the meeting room 300 may include accessibility facilities. For example, the door way may be wide enough to accommodate a wheelchair or may include an induction loop for people wearing hearing aids. Also, other facilities may be provided in the meeting room 300. For example, the meeting room 300 may include a video conference system, an audio conference system or other audio/video facilities. As will be noted later, the type of facilities and capacity of the meeting room 300 will be used in the booking system according to embodiments of the disclosure.

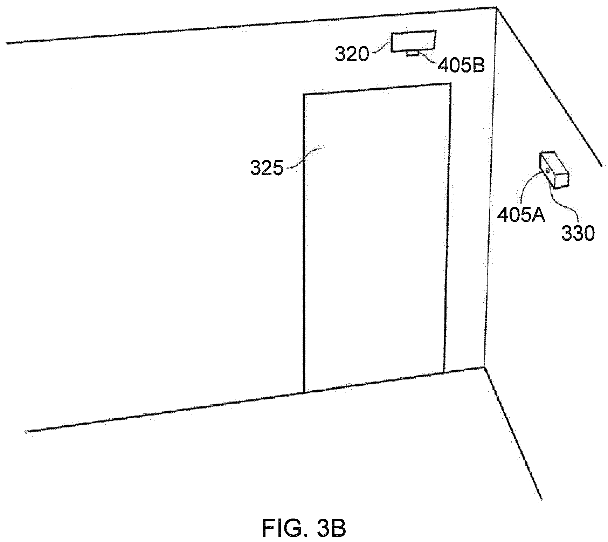

Figure 3B shows a side view of the meeting room 300. The side view shows the position of the door sensor 320 above the door with a sensor 405B pointing downwards to detect people walking through the door way. Similarly, the room sensor 330 has a sensor 405A pointing into the room to detect the presence of a user in the meeting rom 300. The construction of the desk sensor 315, the door sensor 320 and the room sensor 330 will be described in Figure 4.

Referring to Figure 4, the desk sensor 315, the door sensor 320 and the room sensor 330 are shown. Specifically, the room sensor 330 has a room Infra-Red sensor 405A that detects infra-red radiation. The shape of the exposed section of the Infra-Red sensor 405A has a wide field of view. In particular, the exposed section of the Infra-Red sensor 405A has a field of view of around 150° at 5 metres. Obviously, any appropriate field of view is envisaged. As noted above, the purpose of the room sensor 330 is to detect small movements of a user within the meeting room 300.

The door sensor 320 has a door infra-red sensor 405B. As will be apparent, the shape of the exposed section of the door infra-red sensor 405B restricts the field of view of the infra-red sensor 405B to cover the door way only. This restricted field of view is desirable as it reduces the risk of a false-positive detection. In other words, the shape of the exposed section of the infra-red sensor reduces the likelihood of detecting a user either in the room or walking past the outside of the meeting room 300.

Finally, the desk sensor 315 has a desk Infra-Red sensor 405C. Similar to the door sensor 320 above, the shape of the exposed section of the door infra-red sensor 405C restricts the field of view of the infra-red sensor 405C to cover the presence of user sat at the meeting desk 305. This restricted field of view is desirable as it reduces the risk of a false-positive detection.

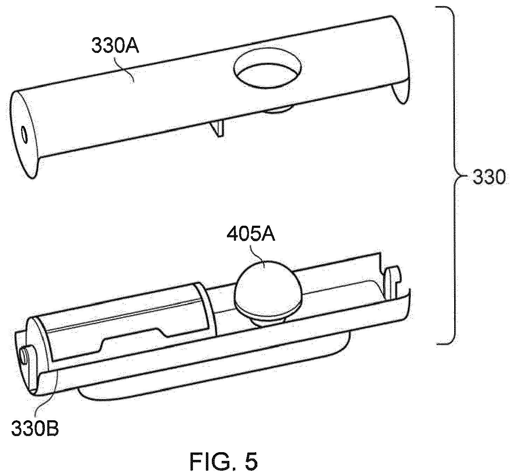

Referring to Figure 5, an exemplary construction of the room sensor 330 is shown. It is noted here that the door sensor 320 and the desk sensor 315 will be constructed in a similar manner. The room sensor 330 has the room Infra-Red sensor 405A located on a mounting 330B. The mounting 330B includes a battery and communications circuitry (not shown) to communicate the presence of a user to the booking server 100. The room sensor 330 also includes a room sensor mask 330A that couples to the mounting 330B. The shape of the opening in the mask 330A defines field of view of the infra-red sensor 405A. In this regard, it is possible that the same mounting 330B may be used for any of the desk sensor 315, the room sensor 330 and the door sensor 320 and it is the shape of the opening in the mask that defines the function of the sensor. This will make construction of the sensors easier.

When mounting the sensors, it is envisaged that the mask may rotate about its horizontal axis. This allows the shape of the field of view to be defined based upon the location of the sensor. For example, in the case of the room sensor 330, as noted above, it is envisaged that the room sensor 330 will be located at an elevated position. Accordingly, the mask may be rotated about its horizontal axis so that the field of view is directed downwards towards meeting desk 300 or an area of the room where users will be active. In other words, if the room sensor 330 is mounted in one manner, the sensor faces 90° from the wall. When the top part of the room sensor 330 is rotated around its horizontal axis, the sensor faces x° downwards or upwards while the mounting plate is still maximizing the contact area on the wall. This is a convenient arrangement as the room sensor 330 is most securely fastened to the wall whilst also allowing the sensor part to be positioned to increase the likelihood of detecting users and will reduce the likelihood of detecting false positives.

Figure 6 shows a data structure which is, in embodiments, a database. The database is shown as two separate databases (a meeting room database and a user database), but the disclosure is not so limited and a single database may be provided. The data structure is stored in the server storage 115 of the booking server 100.

Referring to the Meeting Room Database, a number of parameters associated with each meeting room are stored in correspondence with the meeting room. In particular, the location of each meeting room is stored in correspondence with the meeting room. The location may be the GPS co-ordinates which provide the global position of the meeting room. Of course, other position information defining the location of the meeting room is envisaged. The purpose of storing the location of each meeting room is to establish where each user is relative to the meeting room. This will be described later.

The capacity of the meeting room is also stored in correspondence with the meeting room. The purpose of storing the capacity of each meeting room is to assist in selecting the meeting room as will be explained later.

The facilities of the meeting room are also stored in correspondence with the meeting room. The purpose of storing the facilities of each meeting room is to assist in selecting the meeting room as will be explained later.

The timetable of bookings for each meeting room is also stored in correspondence with the meeting room. The purpose of storing the bookings is to determine when the meeting room is available for booking. The user who booked the meeting room is also stored. Of course, although the room booking information is stored within the database, the disclosure is not so limited. Specifically, the room booking information may be retrieved from another room booking system or other database as would be appreciated.

Finally, the current status of the meeting room is stored in correspondence with the meeting room. This status defines whether the meeting room is in use or empty. In order to determine the current status, the output from each of the desk sensor 315, the door sensor 320 and the room sensor 330 is analysed. In particular, the door sensor 320 identifies a person walking through the door way. If the room sensor 330 is then activated, it is apparent that the user is in the meeting room 300. However, if the room sensor 330 does not detect a person after the door sensor 320 has identified a person walking through the door way, then it is presumed the person has walked out of the meeting room 300. The desk sensor 315 may also detect the presence of a user. As the desk sensors 315 are closer to a user, and it is likely that the user will move their legs during a meeting, the desk sensors 315 increase the likelihood of detecting the presence of a user.

Referring to the User Database, the device associated with each user is stored in association with the user. In embodiments, this may be the Media Access Control (MAC) address of the user device which is stored within the device storage 215 in user device 200. Alternatively, any kind of unique device identifier stored within the user device is envisaged. The purpose of the unique device identifier is to associate the user device 200 communicating with the booking server 100 with a particular user account for the booking system. Although the foregoing describes associating one user device with one user, the disclosure is not so limited. For example, a plurality of user devices may be associated with one user. This would allow a user to have a plurality of user devices such as a laptop computer, tablet computer and mobile telephone associated with them.

The current location of the device 200, and thus the user, is also stored in association with the user. The current location may be provided by the device positioning circuitry 225 and communicated to the booking server 100 by the device communication circuitry 205. As will be appreciated, the format of the current location may be any format and will typically depend upon the type of positioning system used by the device positioning circuitry 225. For example, the positioning information may be a local co-ordinate system used by the BLE beacons. Of course, other positioning information such as WGS84 (GPS) co-ordinates may be used. It is noted that any positioning information is envisaged.

The location of planned meetings and times of those meetings are stored in association with the user. Although the location of the meetings is shown as GPS co-ordinates, the disclosure is not so limited. However, by providing the location of the planned meetings in the same format as the current location, it is possible to identify is the user is in a meeting or is close to a meeting. This means that the user may be easily tracked down in the event that a user is late for a meeting. Moreover, meetings may be convened between people outside of meeting rooms. For example, for a more informal setting, users may wish to use a canteen or relaxation room for a meeting. This may be achieved where the location of the planned meeting is a geographical position rather than a meeting room identifier.

In addition, for each meeting, it is noted in the User Database whether the user is an organiser of the meeting or is an attendee. This is marked in Figure 6 by either an "O" or an "A".

Finally, for each user, any accessibility considerations are noted. For example, if the user is in a wheelchair, then wheelchair access to the meeting room is important or if the user wears a hearing aid, an induction loop may be required. This determines the selection of the most appropriate room for the meeting.

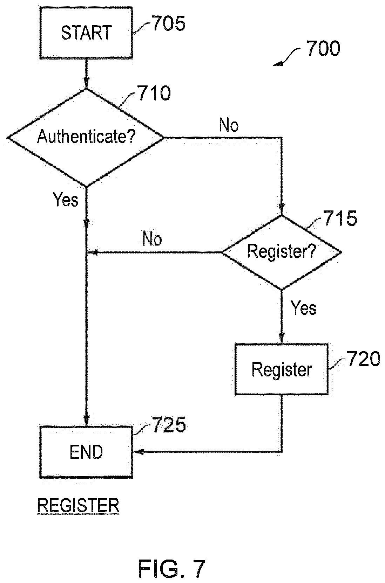

Figures 7 to 9 describe the operation of the booking system according to embodiments.

Referring to Figure 7, a process explaining a registration process for a user wanting to connect to the booking server 100. The process 700 starts at step 705. Typically, step 705 will commence when an application program stored in device storage 215 is opened or an appropriate website is visited by user device 200.

The process moves to step 710. In step 710, the user device 200 authenticates the user. Specifically, the user device 200 will ask the user to enter a username and password into the device interface 220. The entered username and password will be returned to the booking server 100 along with the device ID stored in the device storage 215. In the event that the username and password are valid and match the device ID, the user of the device 200 is authenticated and the process follows the "yes" path and ends in step 725.

However, in the event that the user of the user device 200 is not authenticated, the user will be given a number of other opportunities to provide the correct credentials. In the event that the user is then authenticated, the process moves to step 725.

In the event that the user of the user device 200 is not authenticated or has not previously registered either themselves or the user device 200 with the booking server 100, the user will be given the option to register in step 715.

In the event that the user does not wish to register, the process follows the "no" path and the process ends in step 725. In the event that the user does wish to register, the "yes" path is followed to step 720 where the registration process commences.

In the event that the user device 200 has not previously been registered, the device ID will be stored in association with the user.

However, in the event that the user has not previously been registered, the user will be asked to complete a registration process. The registration process will ask the user relevant questions such as a username and password. In addition, the registration process will ask the user questions sufficient to complete the User Database of Figure 6. For example, "does the user require any accessibility feature?". In other words, during the registration process, it is determined whether there are any facilities required in a meeting room so that the user may attend a meeting. For example, the user may require wheelchair access to the meeting room.

The process then ends in step 725.

Of course, there are other mechanisms for registering a user. In one further example, the user may enter his or her corporate Email address into the user device 200. The domain ending decides the company for whom the user works. So, an Email address ending @sony.com will indicate that the user works for Sony. In this case, a passcode is sent to the Email address that may be a Personal Identity Number (PIN) or the like. The user enters this into the user device when they log on possibly in conjunction with their corporate Email address to authenticate the user. Further, it is possible that any accessibility requirements may be provided by the administrator of the corporate account so that the user does not need to complete a registration process.

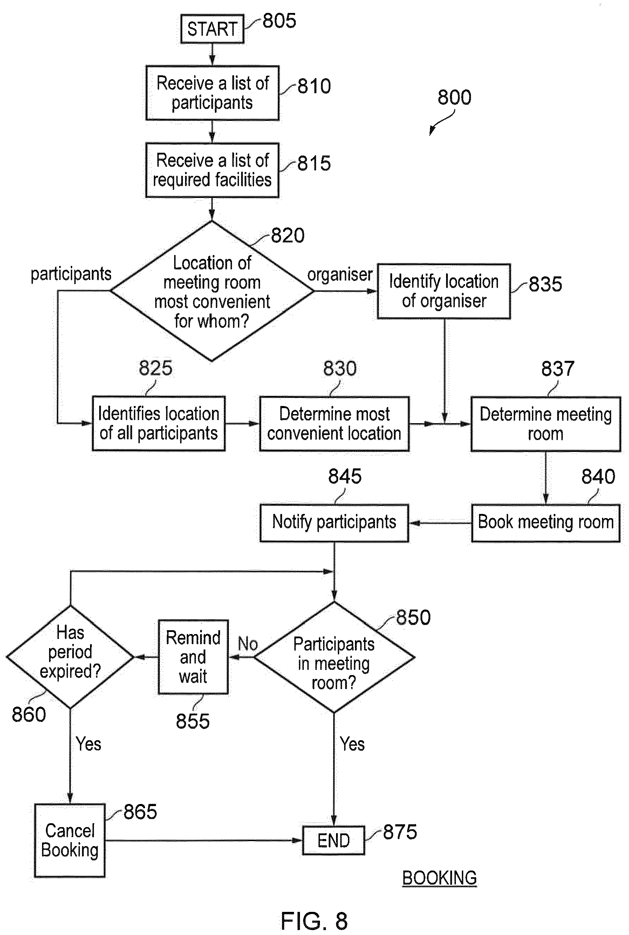

Referring to Figure 8, a booking process 800 carried out on the booking server 100 is described. The process 800 starts in step 805. The process 800 will be started by a user initiating a booking feature of the software application stored in the device storage 215.

It should be noted here that the user may book a meeting room at a specific future time, or in embodiments, may book a meeting room (or other meeting area) for an ad-hoc meeting. When booking a meeting room, the user (who will be the organiser of the booking) will identify a list of attendees of the meeting. This may be one or more further attendee. This list of attendees may be taken from a contact list within the user device 200. For example, the user may select the attendees from a drop down list of contacts. Of course, the disclosure is not so limited and no further attendees may be invited. For example, the user may book the meeting room for their own use only.

This list of attendees is sent to the booking server 100 and is received by the booking server 100 in step 810. Of course, as noted above, it is possible that no other attendees will be present at the meeting, for example, if the organiser just requires the meeting room to make a private call or the like.

When booking the meeting room, the user will also define the facilities required in the meeting room. For example, the user may specify that video conference facilities, audio conference facilities or the like are required. The required facilities may also be predefined for user. For example, if the user has mobility issues such as being in a wheelchair, a facility required of the meeting room is that it must have wheelchair accessibility. Similarly, in the event that the user wears a hearing aid, the meeting room should include an induction loop. These predefined facilities will be collected at the registration process as described above with reference to Figure 7.

This list of required facilities is provided to the booking server 100 in step 815.

The process then moves to step 820 where the user specifies whether the meeting room should be selected to have a location that is most convenient for the organiser of the booking (or another participant of the meeting) or whether the meeting room should be selected to be in a location most convenient for the meeting participants as a whole.

In the event that the organiser selects that the meeting room should be selected to have a location most convenient for the organiser of the booking, the "organiser" path is followed. The process moves to step 835 where the location of the organiser is determined. Of course, if there is no other participants of the meeting, the meeting room will automatically be selected to be most convenient for the organiser.

Firstly, the user may already be physically present in the desired meeting area. In other words, the user may have found an empty meeting area and may wish to book the empty meeting area for an ad-hoc meeting. In this case, the user may indicate to the booking server 100 that the user just wants to book out the meeting area in which he or she is currently located for a predetermined period of time. In this instance, the current location of the organiser is determined. For example, the device positioning circuitry 225 within the user device 200 may provide the information to the booking server 100 when making the request to book the meeting area. This may be a geographical position and will identify the meeting area.

Alternatively, or additionally, the user may indicate their presence in a particular location. This may be achieved by interacting or registering with a tablet or other apparatus located inside or outside the meeting room, by, for example, entering an identifier or tapping the user device 200 on the apparatus where the device ID may be transferred to the apparatus using Near Field Communication (NFC) or the like. In this instance, the booking status of the empty meeting room will be checked. Specifically, the booking server 100 will interrogate the meeting room database to determine if the meeting room is booked out by another person. In the event that the empty meeting room in which the user is located is free, the empty meeting room will be selected as the most convenient meeting room for the organiser. Alternatively, in the event that the empty meeting room is booked for a meeting either at the current time or is booked for use before the expiration of the predetermined time, the organiser will be notified of this and a different meeting room will be determined.

It should be noted that the predetermined time may be defined by the user. For example, the user may indicate the time for which he or she wishes to book the meeting room. Of course, the predetermined time may be a default time, such as 15 minutes. Any predetermined time is envisaged.

Secondly, the organiser may wish for the booking server 100 to select a meeting room for his or her use (or the desired meeting room may be already booked out). In this case, the location of the organiser may be determined as described above.

After the location of the organiser is determined, the process moves to step 837.

Returning to step 820, in the event that the location of the meeting is most convenient for the participants as a whole, the process follows the "participant" path and moves to step 825.

In step 825, the location of all the participants is determined. This, in embodiments, will be achieved using the device positioning circuitry 225 within the user device 200. The process then moves to step 830 where the most convenient location for the meeting room is determined. In order to achieve this, the distance between each user and each available meeting room (i.e. a meeting room that is not booked and optionally whose current status is "empty") is determined. The average distance (either mean, median or modal average) to each meeting room is then determined and the meeting room which has the lowest average distance is selected as the most convenient location is step 830.

Once the meeting room having the most convenient location is determined, the process moves to step 837.

In addition to the location, there are a number of other considerations when determining the most convenient meeting room and these will be explained below.

The number of participants of the meeting and/or the required facilities for the meeting room may also be considered when selecting the most convenient meeting room in step 837. In embodiments, only meeting rooms having no bookings at the current time (or before the expiration of the predetermined period), and having a capacity equal to or larger than the number of participants and/or the requisite facilities will be considered as candidate meeting rooms. This ensures that the meeting room is large enough and has the requisite facilities for the ad-hoc meeting.

Of course, the disclosure is not so limited and any criteria may be considered when determining the meeting room as the most suitable.

In instances, even if a meeting room does not have the required capacity, or the appropriate facilities, one or more meeting room may be considered the most suitable and may be booked. For example, where the capacity of a meeting room is less than the number of attendees, two meeting rooms may be booked and the meeting may be held between those two different meeting rooms connected using a video conference (or audio conference) facility. Further in this instance, the organiser may be notified of the video connection parameters, such as the video conference equipment number so that the organiser may connect to the other meeting. Alternatively, the video conference equipment in one meeting room may connect to the video conference equipment in the other meeting room automatically when the meeting rooms detect the presence of a user and/or the user devices in the respective meeting room using one or more of the sensors located in the meeting room.

In other instances, the facilities within a meeting room may be the most important. For example, if the meeting is arranged to use a video conference call then the requirement to have video conferencing facilities is very important. Similarly, if the organiser of the meeting (or another attendee) requires wheelchair access, then the meeting room selected must accommodate this.

The organiser of the meeting may be asked to prioritise the characteristics that constitute a convenient meeting room for any booking. For example, the organiser may be asked to identify the most important feature of the meeting room for their meeting, such as facilities, capacity, location or the like.

It should be noted that these characteristics (other than location) are applicable to all

After a meeting room has been selected as the most suitable in step 837, the process moves to step 840, where the most suitable meeting room is automatically booked.

The meeting room database and the user database are updated. Specifically, the meeting room will be booked for the predetermined time. As explained above, this time period may be defined by the user when arranging the adhoc meeting or may be a default value. The default value may be 15 minutes for example although longer and shorter periods are naturally envisaged.

The process then moves to step 845.

In step 845 the attendees of the meeting are notified by the booking server 100. Specifically, the booking server 100 communicates with the user devices 200 associated with each user. In the event that the only participant of the meeting is the organiser, only the organiser will be notified. However, where there are other participants, at least one of the other participants (and not necessarily all) is notified. The booking server 100 informs the notified user or users of the location of the booked meeting area. Additionally, the booking server 100 informs the user device 200 of the identity of the organiser of the meeting and the period of time for which the meeting room is booked. Indeed, other information may be provided to the attendees instead of or in addition to that described above such as a map identifying a route to the booked meeting room and/or audio directions.

The process then moves to step 850.

In step 850, and after a period of time, the sensors located in the meeting room are interrogated by the booking server 100. Specifically, the sensors are interrogated to establish whether any attendees have entered the meeting room. In the event that the attendees have entered the meeting room, the "yes" path is followed and the meeting is assumed to be taking place. The process then ends in step 875.

On the other hand, in the event that one or more of the sensors does not detect the presence of an attendee, the "no" path is followed to step 855. In step 855, the attendees are sent a notification by the booking server 100 reminding them of the meeting. This may be by the application software, a text message or Email message or the like.

The process then moves to step 860.

In step 860, the process checks whether a predefined period has expired. This predefined period may be set depending on the average distance from the selected meeting room the attendees were located. For example, for attendees that were located close to the meeting room, the predefined period may be shorter than if the attendees were located further from the meeting room. In other words, the predefined period may be set depending on the distance the attendees were from the meeting room to allow the attendees time to reach the meeting room. Alternatively, the predefined period may be set by default, for example, 5 minutes. In any event, the predefined period should be less than the predetermined period which is the amount of time that the meeting room is booked.

In the event that the predefined period from the attendees being notified has not expired, the "no" path is followed back to step 850. In step 850, the sensors are again interrogated to determine if one or more attendees are in the meeting room.

Returning to step 860, in the event that the predefined period has expired, the "yes" path is followed to step 865. In step 865, the ad-hoc booking made by the organiser is cancelled.

The purpose of steps 850-865 is to ensure that the meeting room(s) allocated to the ad-hoc booking are being used. This check of the presence of one or more attendee means that if no-one has attended the meeting room within a reasonable time, then the meeting room is assumed to be not required. Accordingly, the ensure that meeting room resource is efficiently used, the meeting room booking is cancelled automatically in the event that no attendees have visited the meeting room.

The process then ends in step 875.

It should be noted that if the sensors located in the meeting room indicate that no activity has taken place in the meeting room for a period of time, the meeting will be automatically cancelled. This means that should the meeting finish ahead of schedule and the participants leave the meeting room, the scheduled meeting will be cancelled automatically. This efficiently uses meeting room resource whilst requiring very little user input.

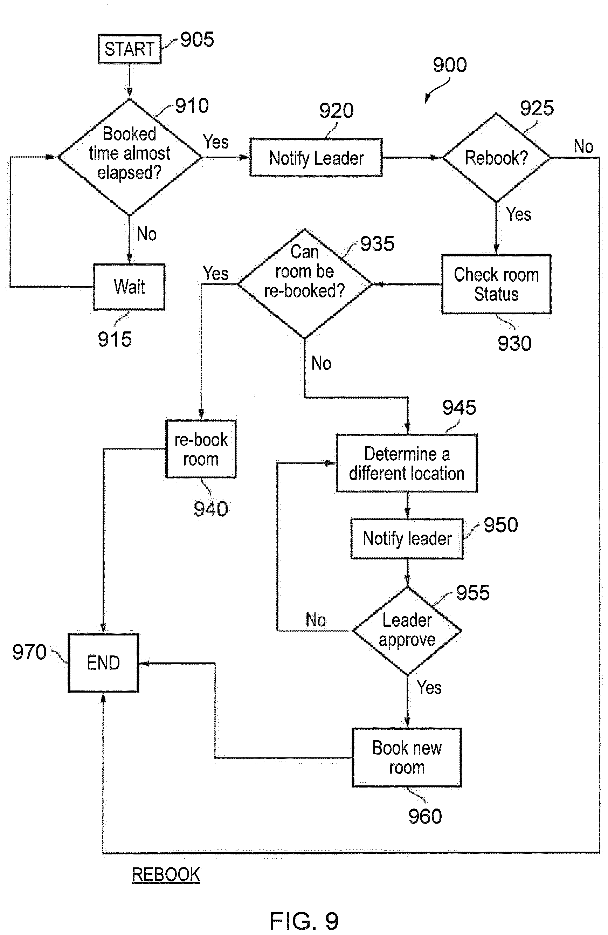

Referring to Figure 9 a process 900 for re-booking a meeting room is described.

The process starts at step 905. The process then moves to step 910. In step 910, a check is made to determine if the booked time has almost elapsed. Specifically, in step 910, the booking system 100 compares the current time with the predetermined time at which the meeting room booking will expire. When the current time is a more than a specified period (for example 2 minutes) from the predetermined time, the most convenient meeting room for the organiser is determined by identifying the current location of the organiser. In other words, when the current time is a specified period of time from the expiration of the booking, a decision needs to be made whether to continue the meeting. Therefore, in the event that the current time is more than the specified period of time from the expiration of the booking, the "no" path is followed to step 915 where the process waits and returns to step 910.

On the other hand, in the event that the current time is less than the specified period of time from the expiration of the booking, the "yes" path is followed to step 920. In step 920, the organiser of the meeting is notified that the meeting booking is about to expire. This notification may be sent to the user device 200 as a text message, or via the application software. Alternatively, or additionally, the organiser may be notified using a different mechanism such as via the tablet or other messaging system built into the meeting room.

When notifying the organiser, an option is provided to the organiser to rebook a meeting room in step 925. This allows the meeting to continue beyond the allotted booking slot. It should be noted here that the meeting room that is currently booked may be re-booked or the location of the meeting may need to change (if the current meeting room is already booked by someone else for the new booking slot). Of course, the disclosure is not so limited and, although not specifically mentioned, it is envisaged that in the event the current meeting room is booked to someone else for the upcoming meeting, the location of the upcoming meeting may be changed so that the current occupants may remain in the meeting room.

It is envisaged that the organiser will indicate the additional amount of time for which they wish to extend the booking. In the event that no amount of time is provided by the user, a default amount of time, such as 15 minutes or 10 minutes or the like will be provided.

Returning to step 925, in the event that the organiser does not wish to extend the meeting, the "no" path is followed to step 970 where the process ends.

On the other hand, in the event that the organiser does wish to extend the meeting, the "yes" path is followed to step 930 where the room status of the current meeting room is checked. In this step, a check is made to identify if extending the booking in the current room will clash with another meeting in the meeting room. In other words, in step 930, a check is made of the "booking" column in the meeting room database to ensure that the current meeting room is not booked to another user should the current booking slot be extended.

The process moves to step 935 where a decision is made to determine whether the meeting room can be re-booked. In the event that the meeting room can be re-booked, the "yes" path is followed to step 940.

In step 940, the booking for the meeting room is extended. The amount of time by which the meeting room booking is extended may be determined by the availability of the meeting room or may be a default time, or may be the amount of time set by the user from step 925.

The process then moves to step 970 where the process ends.

Returning to step 935, in the event that the meeting room cannot be re-booked, the "no" path is followed to step 945.

In step 945, the location of a different meeting room is determined. This determination is performed using the same principles described above. Specifically, the determination of the different meeting room is performed using the principles explained with reference to step 835.

Once the location of the different meeting room has been determined in step 945, the meeting organiser and optionally the other participants are notified of the location of the new meeting room in step 950. A map and possible route (including, if desired, audio directions) to the location of the new meeting room may also be provided.

The process then moves to step 955 where the organiser of the meeting provides his or her approval accepting the new meeting room. In step 955, in the event that the organiser does not accept the new meeting room, the "no" path is followed to step 945 where a new meeting room location is determined. However, in the event that the organiser of the meeting does accept the new meeting room, the "yes" path is followed to step 960 where the new meeting room is booked and the Meeting Room Database is accordingly updated. The process then ends at step 970.

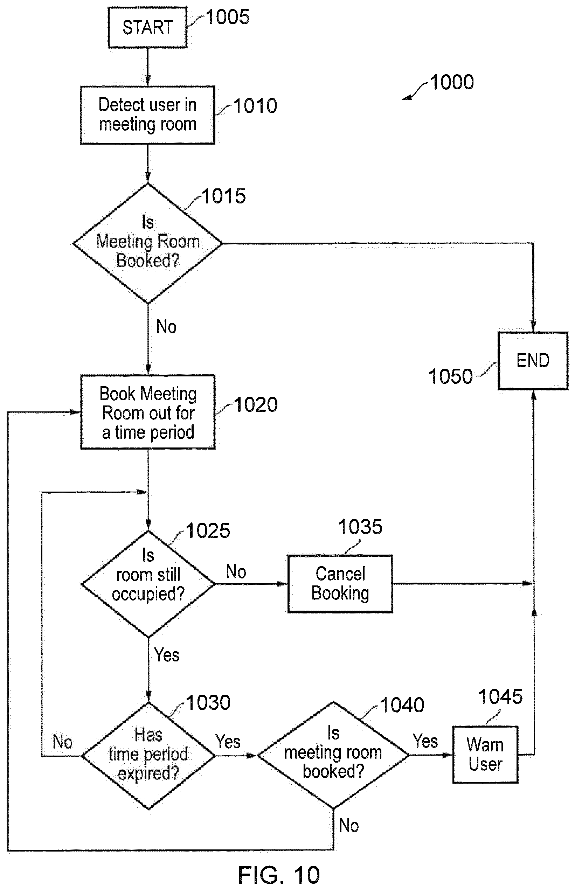

In Figure 10, a flow chart showing embodiments of the disclosure relating to booking a meeting room is shown. The process 1000 starts at step 1005. The process moves to step 1010 where a user is detected in a meeting room. This may be using the door sensor, the room sensor or via the position of a user device within the location. It should be noted here that it is desirable to detect the presence of a user for short period of time (a first period of time), such as one minute, so that a person may enter to empty a waste bin or switch a light off or the like without the following process taking place. This reduces unnecessary booking of the meeting room.

The process moves to step 1015 where a check is made to establish whether the meeting room is booked by a third party. In the event that the meeting room is already booked by a third party, the "yes" path is followed and the process ends in step 1050. In addition, the user may also be warned that the meeting room is booked by an audible sound being played through a speaker system or the like. Alternatively, a message may be pushed to a user device detected within the meeting room.

In the event that it is established that the meeting room is not booked in step 1015, the "no" path is followed to step 1020. In step 1020, the meeting room is booked out for a period of time (a second period of time) and the room booking information is updated. This time period may be 15 minutes or the like. This period of time may be set by administrators. Consequently, this ensures that the room is booked out for use by the user. In the event that the identity of the user is established through, for example, the position of the user device, the user database may also be updated.

The process moves to step 1025 where a check is made to establish whether the meeting room is still occupied. This may be using position information from user devices or one or more room sensors. This check, in embodiments, is carried out prior to expiration of the period of time.

In the event that the meeting room is no longer occupied, the "no" path is followed to step 1035 where the booking is cancelled. This allows the meeting room to be booked by another party. The process then ends in step 1050.

However, returning to step 1025, if the room is still occupied, the process follows the "yes" path to step 1030 where a check is made to establish whether the period of time has expired or is within, say, 2 minutes (or some other amount of time) of expiring. In the event that the period of time has expired (or is within the other amount of time), the process follows the "no" path to step 1025. However, in the event that the period of time has expired (or is within the other amount of time), the "yes" path is followed to step 1040.

In step 1040, it is established whether the meeting room is booked out to a third party. In the event that the meeting room is not booked out to a third party, the "no" path is followed to step 1020 and the meeting room is booked out for a time period (a third time period). This third time period may be the same or different (for example shorter) than the second time period.

However, in the event that the meeting room is booked out to a third party, the "yes" path is followed to step 1045 where the user is warned as described above. The process then ends in step 1050.

In the embodiments of Figure 10, this allows a free meeting room to be used by people with the security that the meeting room is free and the user cannot be thrown out of the meeting room by other people.

Obviously, numerous modifications and variations of the present disclosure are possible in light of the above teachings. It is therefore to be understood that within the scope of the appended claims, the disclosure may be practiced otherwise than as specifically described herein.

In so far as embodiments of the disclosure have been described as being implemented, at least in part, by software-controlled data processing apparatus, it will be appreciated that a non-transitory machine-readable medium carrying such software, such as an optical disk, a magnetic disk, semiconductor memory or the like, is also considered to represent an embodiment of the present disclosure.

It will be appreciated that the above description for clarity has described embodiments with reference to different functional units, circuitry and/or processors. However, it will be apparent that any suitable distribution of functionality between different functional units, circuitry and/or processors may be used without detracting from the embodiments.

Described embodiments may be implemented in any suitable form including hardware, software, firmware or any combination of these. Described embodiments may optionally be implemented at least partly as computer software running on one or more data processors and/or digital signal processors. The elements and components of any embodiment may be physically, functionally and logically implemented in any suitable way. Indeed the functionality may be implemented in a single unit, in a plurality of units or as part of other functional units. As such, the disclosed embodiments may be implemented in a single unit or may be physically and functionally distributed between different units, circuitry and/or processors.

Although the present disclosure has been described in connection with some embodiments, it is not intended to be limited to the specific form set forth herein. Additionally, although a feature may appear to be described in connection with particular embodiments, one skilled in the art would recognize that various features of the described embodiments may be combined in any manner suitable to implement the technique.

Embodiments of the disclosure may be defined according to the following numbered paragraphs:
1. A method of selecting a meeting area to book, comprising the steps of:
   determining the location of a user;
   determining a booking state of a plurality of candidate meeting areas; and in dependence of the user's location and the booking state of the plurality of candidate meeting areas; the method comprises:
      automatically selecting and booking one of the candidate meeting areas to the user for a predetermined period of time; and
      notifying the user of the booking.
2. A method according to paragraph 1, wherein the step of selecting one of the candidate meeting rooms is dependent upon at least one of the location of at least one other user of the meeting room, the number of other users of the meeting room and the user profile of the user.
3. A method according to paragraph 1, comprising the step of:
   notifying at least one other user of the location of the booked candidate meeting area.
4. A method according to paragraph 1, comprising the step of:
   determining the location of the user using a positioning system of a user device.
5. A method according to paragraph 1, comprising the step of:
   determining the location of the user using a registration of a user at the candidate meeting area.
6. A method according to paragraph 1, comprising the step of:
   determining the presence status of at least one of the user or the other user in the meeting area; and in the event that the presence status indicates no presence in the meeting area, the method comprises:
   cancelling the booking.
7. A method according to paragraph 6, wherein the determining the presence status is performed by a sensor located within the meeting area.
8. A method according to paragraph 1, comprising the step of:
   notifying the user before the expiration of the predetermined period of time; and
   in dependence of the future booking status of the meeting area, re-booking the meeting area upon instruction from the user.
9. A method according to paragraph 8, wherein in the event that the future booking status of the meeting area precludes the re-booking of the meeting area, the method comprises:
   selecting a different meeting area from a candidate set of meeting areas.
10. A method according to paragraph 1, wherein the selecting of the meeting area is based upon the facilities within the meeting area.
11. A method of booking a meeting room, comprising:
   determining the presence of a person in a meeting room for a first period of time;
   checking the booking status of the meeting room and in the event of the meeting room having no booking, the method comprises:
      changing the booking status of the meeting room to booked for a second period of time.
12. A method according to paragraph 11, further comprising:
   determining the presence of a person in the meeting room during the second period of time, and in the event of no presence being determined, the method further comprises:
   changing the booking status of the meeting room to no booking.
13. A method according paragraph 11, wherein before the expiration of the second period of time, the method further comprises:
   checking the booking status of the meeting room and in the event that there is no booking,
   book meeting room for a third period of time.
14. A computer program product comprising computer readable instructions which, when loaded onto a computer, configure the computer to perform a method according to paragraph 1.
15. An apparatus for selecting a meeting area to book, comprising circuitry configured to:
   determine the location of a user;
   determine a booking state of a plurality of candidate meeting areas; and in dependence of the user's location and the booking state of the plurality of candidate meeting areas; the circuitry is configured to:
      automatically select and book one of the candidate meeting areas to the user for a predetermined period of time; and
      notify the user of the booking.
16. An apparatus according to paragraph 15, wherein the circuitry is configured so that the step of selecting one of the candidate meeting rooms is dependent upon at least one of the location of at least one other user of the meeting room, the number of other users of the meeting room and the user profile of the user.
17. An apparatus according to paragraph 15, wherein the circuitry is configured to:
   notify at least one other user of the location of the booked candidate meeting area.
18. An apparatus according to paragraph 15, wherein the circuitry is configured to:
   detect the location of the user using a positioning system of a user device.
19. An apparatus according to paragraph 15, wherein the circuitry is configured to:
   detect the location of the user using a registration of a user at the candidate meeting area.
20. An apparatus according to paragraph 15, wherein the circuitry is configured to:
   detect the presence status of at least one of the user or the other user in the meeting area; and in the event that the presence status indicates no presence in the meeting area, the circuitry is further configured to:
   cancel the booking.
21. An apparatus according to paragraph 20, wherein the determining of the presence status is performed by a sensor located within the meeting area.
22. An apparatus according to paragraph 15, wherein the circuitry is configured to:
   notify the user before the expiration of the predetermined period of time; and
   in dependence of the future booking status of the meeting area, re-book the meeting area upon instruction from the user.
23. An apparatus according to paragraph 22, wherein in the event that the future booking status of the meeting area precludes the re-booking of the meeting area, the circuitry is configured to:
   select a different meeting area from a candidate set of meeting areas.
24. An apparatus according to paragraph 15, wherein the selection of the meeting area is based upon the facilities within the meeting area.
25. An apparatus for booking a meeting room, comprising circuitry configured to:
   determine the presence of a person in a meeting room for a first period of time;
   check the booking status of the meeting room and in the event of the meeting room having no booking, the circuitry is configured to:
      change the booking status of the meeting room to booked for a second period of time.
26. An apparatus according to paragraph 25, wherein the circuitry is configured to:
   determine the presence status of a person in the meeting room during the second period of time, and in the event of the presence status indicating no presence, the circuitry is further configured to:
   change the booking status of the meeting room to no booking.
27. An apparatus according to paragraph 25, wherein before the expiration of the second period of time, the circuitry is configured to:
   check the booking status of the meeting room and in the event that there is no booking,
   book meeting room for a third period of time.

## Claims

1. A method of selecting a meeting area to book, comprising the steps of:
determining the location of a user;
determining a booking state of a plurality of candidate meeting areas; and in dependence of the user's location and the booking state of the plurality of candidate meeting areas; the method comprises:
automatically selecting and booking one of the candidate meeting areas to the user for a predetermined period of time dependent upon at least one of the location of at least one other user of the meeting room, the number of other users of the meeting room and the user profile of the user;
notifying the user of the booking; and
notifying at least one other user of the location of the booked candidate meeting area.

2. A method according to claim 1, comprising the step of:
determining the location of the user using a positioning system of a user device.

3. A method according to any one of claim 1, comprising the step of:
determining the location of the user using a registration of a user at the candidate meeting area.

4. A method according to any preceding claim, comprising the step of:
determining the presence status of at least one of the user or the other user in the meeting area; and in the event that the presence status indicates no presence in the meeting area, the method comprises:
cancelling the booking.

5. A method according to claim 4, wherein the determining the presence status is performed by a sensor located within the meeting area.

6. A method according to any preceding claim, comprising the step of:
notifying the user before the expiration of the predetermined period of time; and
in dependence of the future booking status of the meeting area, re-booking the meeting area upon instruction from the user.

7. A method according to claim 6, wherein in the event that the future booking status of the meeting area precludes the re-booking of the meeting area, the method comprises:
selecting a different meeting area from a candidate set of meeting areas.

8. A method according to any preceding claim, wherein the selecting of the meeting area is based upon the facilities within the meeting area.

9. A method of booking a meeting room, comprising:
determining the presence of a person in a meeting room for a first period of time;
checking the booking status of the meeting room and in the event of the meeting room having no booking, the method comprises:
changing the booking status of the meeting room to booked for a second period of time.

10. A method according to claim 9, further comprising:
determining the presence of a person in the meeting room during the second period of time, and in the event of no presence being determined, the method further comprises:
changing the booking status of the meeting room to no booking.

11. A method according to either one of claims 11 or 12, wherein before the expiration of the second period of time, the method further comprises:
checking the booking status of the meeting room and in the event that there is no booking,
book meeting room for a third period of time.

12. A computer program product comprising computer readable instructions which, when loaded onto a computer, configure the computer to perform a method according to any preceding claim.

13. An apparatus for selecting a meeting area to book, comprising circuitry configured to:
determine the location of a user;
determine a booking state of a plurality of candidate meeting areas; and in dependence of the user's location and the booking state of the plurality of candidate meeting areas; the circuitry is configured to:
automatically select and book one of the candidate meeting areas to the user for a predetermined period of time dependent upon at least one of the location of at least one other user of the meeting room, the number of other users of the meeting room and the user profile of the user;
notify the user of the booking; and
notify at least one other user of the location of the booked candidate meeting area.

14. An apparatus according to claim 13, wherein the circuitry is configured to:
detect the location of the user using a positioning system of a user device.

15. An apparatus for booking a meeting room, comprising circuitry configured to:
determine the presence of a person in a meeting room for a first period of time;
check the booking status of the meeting room and in the event of the meeting room having no booking, the circuitry is configured to:
change the booking status of the meeting room to booked for a second period of time.
